# DEMANDE DE BREVET EUROPEEN

(11) **EP 1 588 894 A1**
(43) Date de publication de la demande: **26.10.2005**
(21) Numéro de dépôt: 05300297.8
(22) Date de dépôt: 20.04.2005
(51) Int. Cl.: B60P 1/34

(54) **Dispositif tracté supportant un accessoire amovible tel qu'une benne**

(30) Priorité: 21.04.2004 FR 0450748
(71) Demandeur: Roche, Alain Louis, 19500 Jugeals Nazareth (FR)
(72) Inventeur: Roche, Alain Louis, 19500 Jugeals Nazareth (FR)
(74) Mandataire: Fantin, Laurent

(57) **Abrégé**

L'objet de l'invention est un dispositif à accessoire (32) amovible, notamment une benne (34), sur une remorque comprenant un châssis (10), caractérisé en ce qu'il comprend des moyens (30) de manoeuvre dudit accessoire comprenant un bâti (50) comportant trois plateaux (52, 54 et 56) articulés.

## Description

La présente invention concerne un dispositif tracté supportant un accessoire amovible sur remorque, notamment une benne pour la collecte, le transport et le vidage de déchets, plus particulièrement des déchets en quantité limitée. Le dispositif doit aussi permettre la traction sans recourir à un attelage poids lourd.

On connaît le problème des déchets générés par des chantiers, notamment de construction ou de rénovation dans le bâtiment ou dans l'entretien d'espaces verts.

De tels chantiers nécessitent de collecter les déchets sans que ceux-ci soient en quantité suffisante pour requérir une benne de type connue, à grand volume, montée sur camion et amovible. Ces bennes sont généralement portées sur un châssis d'un véhicule poids lourd. Ce châssis comporte une plate-forme munie de galets sur lesquels peuvent rouler des rails solidaires de la benne. Un bras hydraulique muni d'un crochet assure le déplacement et la dépose de la benne vide sur le lieu du chantier.

Une fois remplie, le poids lourd vient reprendre la benne et le bras assure le soulèvement puis le chargement sur la plate-forme arrière, en appui sur les galets.

La benne est ensuite transportée vers une décharge industrielle où les déchets sont triés et traités.

De tels moyens sont adaptés dans certains chantiers importants mais peu satisfaisant pour des chantiers modestes avec un espace réduit, voire pour de la rénovation.

De plus, une telle méthode d'évacuation est d'un coût élevé car tous les déchets sont collectés dans une seule et unique benne, nécessitant un tri. De plus, la location et l'immobilisation d'une telle benne sont également coûteux.

Le mieux serait de disposer de centres de déchetteries sélectives accueillant les professionnels mais ceci nécessitent des bennes de dimensions beaucoup plus modestes puisque multipliées par la différenciation recherchée.

On peut prévoir par exemple sur un chantier de construction, à minima, une benne pour les matériaux non recyclables, une benne pour le bois et une benne pour les gravats, certaines réglementations pouvant prévoir cinq bennes.

Ensuite, il existe une autre contrainte qui est celle du poids car au delà d'un poids total roulant de 3,5 tonnes, généralement les conducteurs sont soumis à un permis spécial.

On connaît la demande de brevet anglais N°2 142 308 qui décrit une remorque avec une benne actionné en pivotement par un vérin, la benne étant soutenue par deux paires de bras formant un parallélogramme déformable. Une telle remorque présente une benne dont l'inconvénient est de dépasser du châssis et de plus, elle n'est pas amovible.

La demande de brevet français N°2 739 068 illustre l'art antérieur avec un agencement permettant la dépose d'une benne au sol avec un système de bras complexe monté sur camion.

La demande de brevet français N° 2 547 292 décrit une plate-forme avec un jambage croisé muni d'un vérin afin d'obtenir un élévateur. En fin de course, l'inégalité des longueurs de bras et du point d'exercice de l'effort au moyen d'un vérin conduit à un basculement de la plate-forme.

On constate que le basculement ne permet aucun déport arrière nécessaire à un vidage complet dans des containers.

Le but de la présente invention est de permettre à des artisans ou autres entrepreneurs ne disposant pas de permis poids lourd ou ne voulant pas engager de tels frais pour l'obtenir, de pouvoir travailler sur un chantier et d'assurer l'évacuation des déchets par eux-mêmes et ceci dans une déchetterie professionnelle compte tenu du fait que les volumes évacués sont supérieurs à ceux des usagers domestiques.

Il convient pour assurer une telle opération de prévoir un dispositif adapté permettant de charger une benne vide ou pleine, de décharger une benne vide ou pleine, de vider une benne pleine dans un container de grande capacité en déchetterie.

Il est encore des contraintes routières importantes. En effet, la benne ne doit pas dépasser le châssis en position route et de façon antinomique, il faut que la benne soit déportée vers l'arrière pour pouvoir décharger correctement dans un container à partir d'un quai de déchargement.

Contrainte supplémentaire, il faut que le vidage de la benne soit complet sans pour cela que la remorque se déplace.

La description qui va suivre concerne un dispositif tracté avec une benne afin d'illustrer par cet exemple l'intérêt et les phases de mise en oeuvre mais la benne peut être remplacée par un plateau porte engin, une nacelle, une cuve ou encore une caisse fermée, ce qui confère au dispositif selon la présente invention une polyvalence adaptée aux métiers des chantiers bâtiments, des entretiens d'espaces verts, ou des travaux de voirie pour ne citer que ceux-là.

Le dispositif selon la présente invention est maintenant décrit en regard des dessins annexés sur lesquels les différentes figures représentent :
- figure 1 : une vue en élévation latérale du dispositif selon la présente invention, avec une benne en place et en position de vidage afin de faire apparaître tous les organes du dispositif,
- figure 2 : une vue de face de ce même dispositif, dans la même position,
- figures 3A, 3B et 3C : une vue schématique de la cinématique du dispositif au cours du vidage,
- figures 4A, 4B et 4C : une vue du chargement d'une benne du sol sur le dispositif, et
- figures 5A, 5B et 5C : une vue du déchargement d'une benne du dispositif sur le sol.

Le dispositif est maintenant décrit indifféremment par rapport aux différentes figures, les références sur ces figures étant conservées de l'une à l'autre.

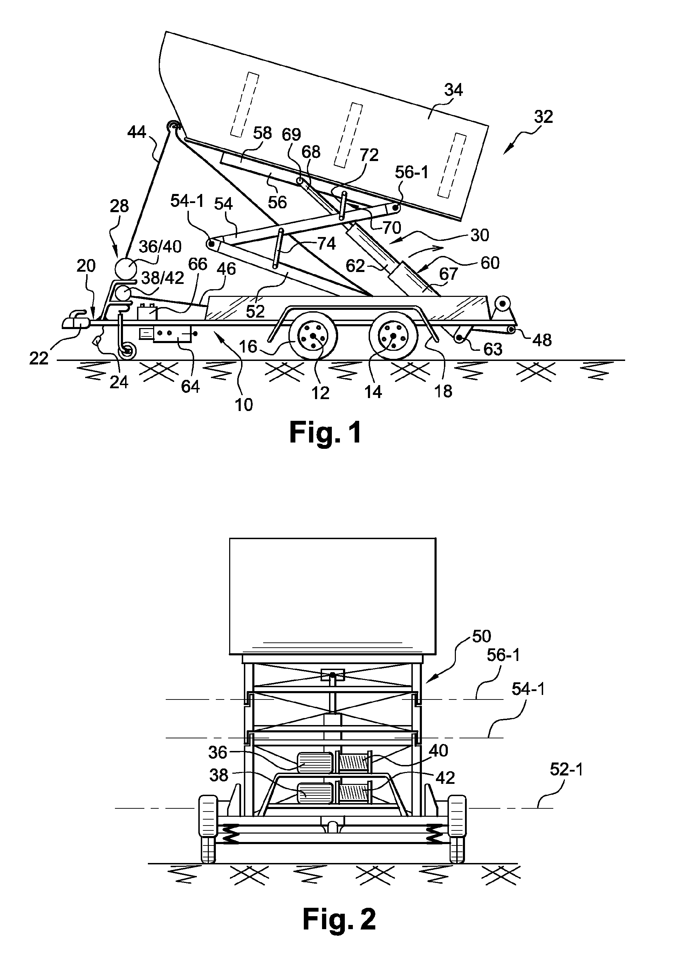

Sur la figure 1, on a représenté un châssis 10 roulant, comprenant deux essieux 12, 14 dont les roues 16 sont protégées par des garde-boue 18, ceci de façon connue.

Le châssis est muni d'une flèche 20 dont l'extrémité porte une tête 22 d'attelage à boule ou à anneau suivant la demande.

Une liaison 24 électrique avec un véhicule tracteur assure un transfert d'énergie du véhicule vers des moyens 28 moteurs disposés sur le châssis.

Le châssis 10 porte des moyens 30 de manoeuvre d'un accessoire 32, en l'occurrence une benne 34.

Les moyens 28 moteurs comprennent deux moteurs frein 36 et 38, électriques, débrayables, avec chacun un tambour 40, 42 d'enroulement d'un câble 44, 46 de traction.

Le premier câble 44 est lié de façon amovible par un crochet à l'avant de la benne 34, l'avant et l'arrière étant considéré par rapport au sens de déplacement du véhicule. La traction par ce câble 44 tend à déplacer par translation la benne vers l'avant.

Le second câble 46 est lié également de façon amovible par un crochet à l'avant de la benne 34, mais ce câble passe par une poulie 48 de renvoi disposée à l'arrière du châssis. Ainsi la traction par ce câble 46 tend à déplacer la benne par translation vers l'arrière.

Les moyens 30 de manoeuvre comprennent un bâti 50 articulé à triple plateaux 52, 54 et 56.

Comme cela est bien visible sur la figure 2, le premier plateau 52 est articulé à l'arrière du châssis autour d'un axe 52-1. Ce premier plateau est orienté vers l'avant du châssis pour venir en superposition avec ce châssis dans une position repliée et pour prendre une position angulaire donnée avec ce châssis lors du basculement comme cela sera expliqué ultérieurement.

Le deuxième plateau 54 est articulé par rapport au premier plateau 52, autour d'un axe 54-1. Ce deuxième plateau est orienté vers l'arrière du châssis pour venir se superposer au premier plateau 52 en position repliée et pour prendre une position angulaire donnée avec ce premier plateau lors du basculement.

Le troisième plateau 56 est articulé par rapport au deuxième plateau 54 autour d'un axe 56-1. Ce troisième plateau 56 est orienté vers l'avant pour venir se superposer au deuxième plateau 54 en position repliée et pour prendre une position angulaire donnée avec ce deuxième plateau lors du basculement.

Ce troisième plateau 56 reçoit la benne et peut être muni de tout moyen adapté tel que des rails pour permettre le guidage de la benne lors des mouvements de translation. De tels agencements sont à la portée de l'homme de l'art et n'intéressent pas directement l'invention.

Ce troisième plateau 56 est complété par des moyens 58 de verrouillage en translation de la benne sur ledit plateau. Dans le mode de réalisation représenté, ces moyens sont constitués de façon simple et connue de goupilles pénétrant dans des trous ménagés dans la benne comme dans le troisième plateau. De façon plus sophistiquée, il est possible de placer des crochets à encliquetage automatique et à déverrouillage manuel.

Les moyens 30 de manoeuvre sont complétés par des moyens moteurs 60. En l'occurrence, ces moyens moteurs comprennent un vérin 62 hydraulique, alimenté à partir d'une centrale 64 hydraulique, autonome, portée par le châssis. Cette centrale hydraulique est alimentée à partir d'une batterie 66 de forte capacité elle-même recevant l'énergie électrique à partir du véhicule tracteur par la liaison 24 électrique. Cette batterie électrique alimente également les moteurs frein 36 et 38, électriques, débrayables.

Le vérin 62 hydraulique comprend un corps 67 de vérin, multi étages, solidaire du châssis, de façon articulée en un point 63 géométriquement adapté, sur l'arrière de ce châssis.

La tige 68 de ce vérin 62 hydraulique est fixée de façon articulée, en un point 69 géométriquement adapté du troisième plateau 56.

Les moyens 30 de manoeuvre comportent de plus des brides 70 interposées entre les différents plateaux.

Ces brides sont, dans le mode de réalisation représenté, des paires de câbles de longueur donnée. De tels câbles sont aptes à se replier aisément, disposant d'une certaine souplesse.

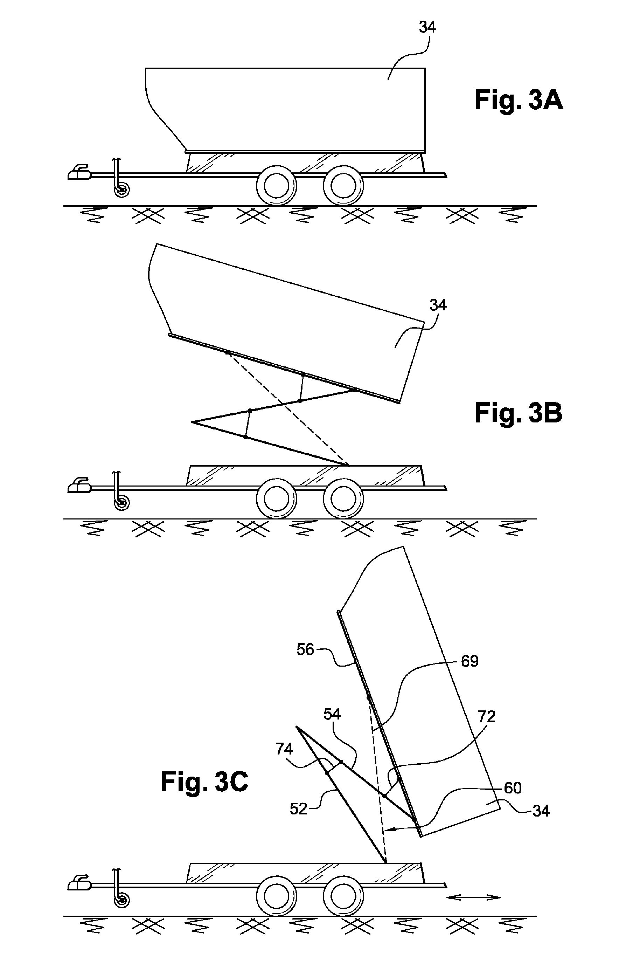

Une première bride 74 comprenant une paire de câbles est interposée entre le premier et le deuxième plateaux 52, 54. Une seconde bride 72 comprenant une paire de câbles est interposée entre le deuxième et le troisième plateaux 54, 56. La mise en oeuvre du dispositif selon la présente invention est décrite en regard des figures 3.

Lorsque l'utilisateur souhaite vider le contenu d'une benne, par exemple dans un contenant de grande capacité d'une déchetterie professionnelle, il recule pour que les roues viennent en butée par rapport au rebord du quai.

Ensuite, après s'être assuré que les moyens de verrouillage 58 sont bien en place, il actionne la centrale 64 hydraulique qui fournit le fluide hydraulique sous pression au vérin.

Le corps multibrins reçoit la plus forte pression compte tenu de sa section plus forte. Sous son action, la géométrie du dispositif conduit d'abord à un déplacement du deuxième plateau 54 qui pivote autour de l'axe 54-1. Les câbles de la bride 74 se tendent. La benne est inclinée vers l'avant.

Ensuite, le troisième plateau 56 pivote autour de l'axe 56-1, ceci jusqu'à ce que la bride 70 avec sa paire de câbles de liaison soit tendue.

Les trois plateaux sont alors liés et positionnés angulairement les uns par rapport aux autres, figure 3B.

La poussée par le vérin 62 conduit à une extension du piston 68 qui soulève la benne 34 et les trois plateaux 52, 54 et 56, cet ensemble pivotant alors autour de l'axe 52-1, en s'inclinant vers l'arrière.

De fait, l'ensemble en s'inclinant vers l'arrière, positionne la benne 34 en déport vers l'arrière et de façon surélevée par rapport au châssis 10, figure 3C.

Une fois la benne vidée, le vérin 62, manoeuvré dans le sens inverse, provoque le repliement des trois plateaux 52, 54 et 56 par superposition les uns sur les autres. Les paires de câbles se replient.

Dans le cas où il convient de charger une benne 34 sur le troisième plateau 56, on utilise les moyens moteurs 28.

La benne 34 est profilée de façon adaptée et comporte une face avant inclinée apte à coopérer avec des galets disposés de façon connue à l'arrière du châssis.

Le crochet du câble 44 est fixé sur une attache de la benne 34 et la mise en service en enroulement assure la traction sur la benne qui se translate et monte sur le troisième plateau.

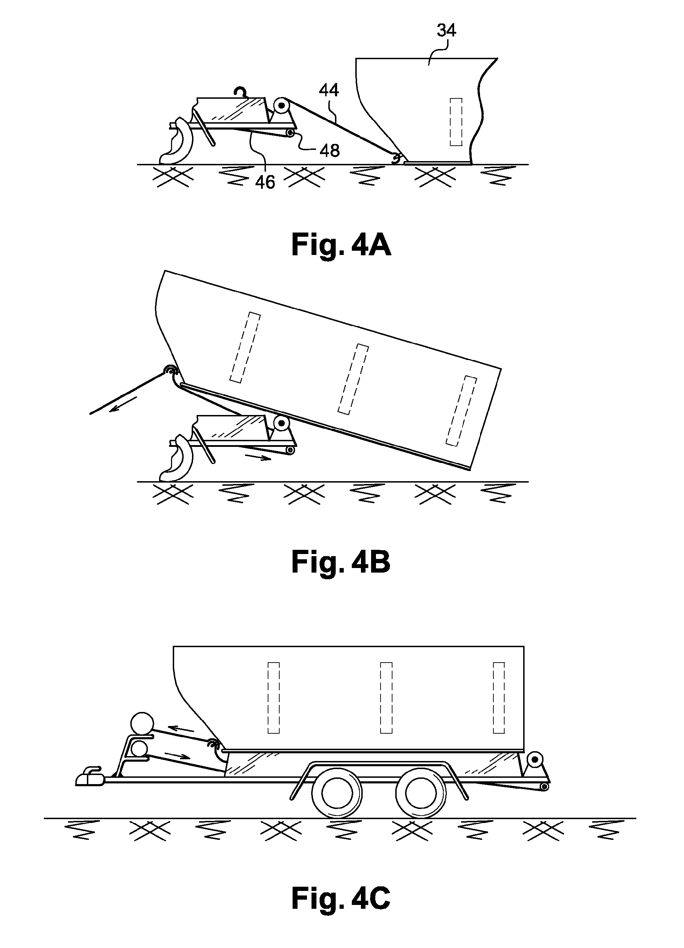

Les différentes étapes sont représentées sur les figures 4A à 4C.

Pour le déchargement, le crochet du câble 46 est fixé sur la même attache et le câble 44 peut être maintenu en place avec le moteur débrayé ou le câble peut être détaché.

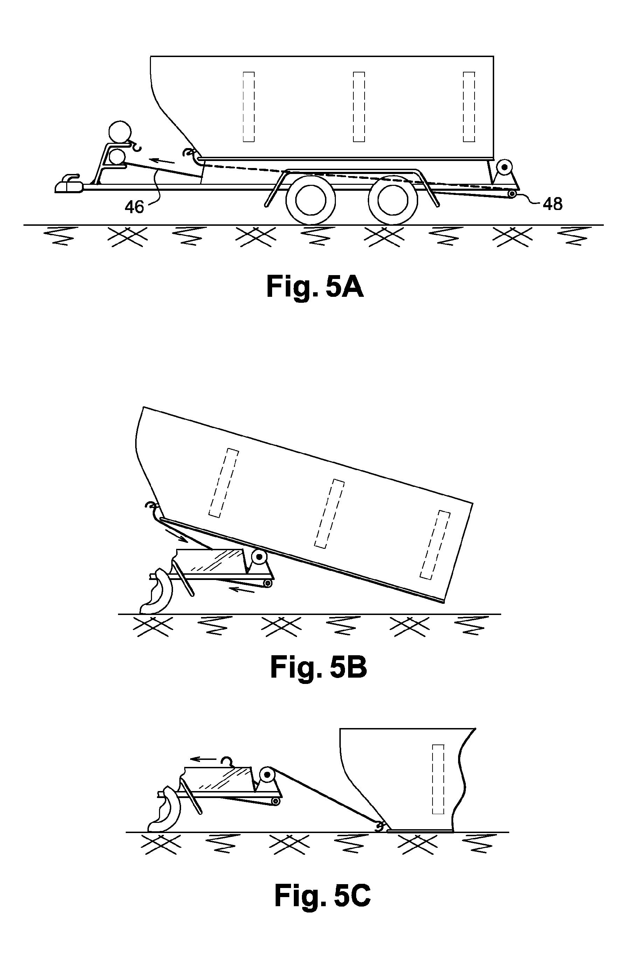

Le moteur 38 entraîne le tambour 42 qui, en enroulant le câble 46, provoque le mouvement en translation vers l'arrière de la benne 34. Les figures 5A à 5C montrent les différentes configurations lors de la dépose d'une benne.

On note que le dispositif est extrêmement fiable car le nombre de pièce mobiles est limité. Les moyens de manoeuvre ont été éprouvés depuis longtemps et sont des produits du commerce. De même, la benne est de forme simple et peut être fabriquée en grand nombre pour assurer un tri sélectif.

L'agencement selon l'invention permet un chargement/déchargement rapide et sécuritaire, les manoeuvres étant pilotées de l'avant du dispositif sans risque par rapport aux mouvements de la charge.

L'agencement permet aussi d'obtenir un déport sur l'arrière pour un vidage intégral, tandis que ce même agencement ne présente aucun dépassement arrière de la benne par rapport au châssis lors du roulage, en position repliée des moyens 50 de manoeuvre.

La polyvalence est assurée par l'accessoire qui peut être un plateau ou un caisson.

## Revendications

1. Dispositif à accessoire (32) amovible, notamment une benne (34), sur une remorque comprenant un châssis (10), **caractérisé en ce qu'**il comprend des moyens (30) de manoeuvre dudit accessoire (32) par rapport au châssis comprenant un bâti (50) comportant trois plateaux (52, 54 et 56) articulés l'un par rapport à l'autre en un point (52-1, 54-1, 56-1).

2. Dispositif à accessoire (32) amovible selon la revendication 1, **caractérisé en ce que** :
- le premier plateau (52) est articulé à l'arrière du châssis (10) autour d'un axe (52-1), ce premier plateau étant orienté vers l'avant de ce châssis,
- le deuxième plateau (54) est articulé par rapport au premier plateau (52), autour d'un axe (54-1), ce deuxième plateau est orienté vers l'arrière du châssis, et
- le troisième plateau (56) est articulé par rapport au deuxième plateau (54) autour d'un axe (56-1), ce troisième plateau (56) étant orienté vers l'avant, ce troisième plateau (56) recevant l'accessoire (32).

3. Dispositif à accessoire (32) amovible selon la revendication 2, **caractérisé en ce que** le troisième plateau (56) comprend des moyens (58) de verrouillage en translation dudit accessoire sur ledit plateau.

4. Dispositif à accessoire (32) amovible selon l'une quelconque des revendications précédentes, **caractérisé en ce que** les moyens (30) de manoeuvre du bâti (50) comprennent des moyens moteurs (60).

5. Dispositif à accessoire (32) amovible selon la revendication 4, **caractérisé en ce que** ces moyens moteurs (60) comprennent un vérin (62) hydraulique, une centrale (64) hydraulique et une batterie (66) électrique.

6. Dispositif à accessoire (32) amovible selon la revendication 5, **caractérisé en ce que** le vérin (62) hydraulique comprend :
- un corps (67) de vérin, multi étages, solidaire du châssis (10), de façon articulée, en un point (63) géométriquement adapté, sur l'arrière de ce châssis,
- une tige (68) fixée de façon articulée, en un point (69) géométriquement adapté du troisième plateau (56).

7. Dispositif à accessoire (32) amovible selon l'une quelconque des revendications précédentes, **caractérisé en ce que** les moyens (30) de manoeuvre comportent des brides (70) interposées entre les différents plateaux :
- une première bride (74) interposée entre le premier et le deuxième plateaux (52, 54),
- une seconde bride (72) interposée entre le deuxième et le troisième plateaux (54, 56).

8. Dispositif à accessoire (32) amovible selon l'une quelconque des revendications précédentes, **caractérisé en ce qu'**il comprend des moyens (28) moteurs composés de deux moteurs frein (36, 38), débrayables, muni chacun d'un tambour (40, 42) d'enroulement d'un câble (44, 46) de traction, le premier câble (44) étant lié de façon amovible à l'avant de l'accessoire (32), le second câble (46) étant lié à l'avant de l'accessoire (32), ce câble passant par une poulie (48) de renvoi disposée à l'arrière du châssis.
